(19) Europäisches Patentamt
European Patent Office
Office européen des brevets

(11) **EP 4 718 831 A1**

(12) **EUROPEAN PATENT APPLICATION**

(43) Date of publication:
**01.04.2026 Bulletin 2026/14**

(21) Application number: **25158349.8**

(22) Date of filing: **17.02.2025**

(51) International Patent Classification (IPC):
*H04N 1/04* (2006.01)    *H04N 1/40* (2006.01)
*G03G 15/043* (2006.01)

(52) Cooperative Patent Classification (CPC):
**H04N 1/0446; G03G 15/043; H04N 1/40031**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2024 JP 2024167052**

(71) Applicant: **FUJIFILM Business Innovation Corp.
Minato-ku
Tokyo (JP)**

(72) Inventors:
• **OKU, Takuya
Ebina-shi, Kanagawa (JP)**

• **INOUE, Michihiro
Ebina-shi, Kanagawa (JP)**
• **NIISAKA, Yusuke
Ebina-shi, Kanagawa (JP)**
• **TSUCHIYA, Ken
Ebina-shi, Kanagawa (JP)**
• **HARA, Nobutaka
Ebina-shi, Kanagawa (JP)**
• **SATO, Masaki
Ebina-shi, Kanagawa (JP)**

(74) Representative: **Becker Kurig & Partner
Patentanwälte mbB
Bavariastraße 7
80336 München (DE)**

(54) **OPTICAL SCANNING DEVICE AND IMAGE FORMING APPARATUS**

(57)    An optical scanning device includes a scanning unit that performs scanning by disposing plural light emitting element groups, each of which includes plural light emitting elements arranged along a main scanning direction, along the main scanning direction so as to face a scanning target object and causing each of the light emitting element groups to emit light based on image information, and a drive unit that drives each of the light emitting element groups of the scanning unit for each scanning period, in which the drive unit divides the plural light emitting element groups into plural sets, and varies a timing of a non-scanning period set between the scanning periods in at least two sets of the light emitting element groups divided into the plural sets.

## Description

BACKGROUND OF THE INVENTION

(i) Field of the Invention

The present invention relates to an optical scanning device and an image forming apparatus.

(ii) Description of Related Art

In the related art, as techniques related to an optical scanning device, for example, techniques disclosed in JP2007-160930A, JP2008-093896A, and the like have already been proposed.

JP2007-160930A discloses that a lighting section that includes a plurality of lighting chips arranged in a row and including a plurality of lighting elements, and a drive section that sets the plurality of lighting elements in the plurality of lighting chips to light up sequentially are provided, in which the drive section is configured to shift a lighting timing between the plurality of lighting chips within a range of a lighting cycle of one lighting element.

JP2008-093896A discloses that a plurality of light emitting element array members in which a plurality of light emitting elements are arranged in a row, and a drive unit that transfers a signals for sequentially lighting up each of the plurality of light emitting elements arranged in each of the plurality of light emitting element array members in an arrangement direction at a predetermined transfer cycle, in which the drive unit is configured to change the transmission cycle in a case of transferring the signal.

SUMMARY OF THE INVENTION

An object of the present invention is to suppress a fluctuation in an intensity of light caused by a fluctuation in a drive voltage, as compared with a case in which timings of non-scanning periods in a plurality of light emitting element groups are identical to each other.

According to a first aspect of the present disclosure, there is provided an optical scanning device including: a scanning unit that performs scanning by disposing a plurality of light emitting element groups, each of which includes a plurality of light emitting elements arranged along a main scanning direction, along the main scanning direction so as to face a scanning target object and causing each of the light emitting element groups to emit light based on image information; and a drive unit that drives each of the light emitting element groups of the scanning unit for each scanning period, in which the drive unit divides the plurality of light emitting element groups into a plurality of sets, and varies a timing of a non-scanning period set between the scanning periods in at least two sets of the light emitting element groups divided into the plurality of sets.

According to a second aspect of the present disclosure, in the optical scanning device according to the first aspect, in the plurality of sets, a plurality of adjacent light emitting element groups among the plurality of light emitting element groups may be included in an identical set.

According to a third aspect of the present disclosure, in the optical scanning device according to the second aspect, the drive unit may be disposed for each set of the plurality of light emitting element groups.

According to a fourth aspect of the present disclosure, in the optical scanning device according to the third aspect, the drive unit may equally divide an interval from the scanning period to a next scanning period in accordance with the number of sets of the light emitting element groups, and vary the timing of the non-scanning period by the equally divided interval.

According to a fifth aspect of the present disclosure, in the optical scanning device according to the first aspect, the drive unit may vary the timing of the non-scanning period so that a fluctuation in a drive voltage that occurs during the non-scanning period is suppressed.

According to a sixth aspect of the present disclosure, in the optical scanning device according to the fifth aspect, the fluctuation in the drive voltage that occurs during the non-scanning period may converge such that the drive voltage is increased to a value exceeding a specified value and then is decreased to a value lower than the specified value.

According to a seventh aspect of the present disclosure, in the optical scanning device according to the sixth aspect, the drive unit may drive each set of the light emitting element groups after the fluctuation in the drive voltage converges.

According to an eighth aspect of the present disclosure, in the optical scanning device according to the sixth aspect, the drive unit may cause a next set of the light emitting element groups to each emit light immediately before the drive voltage becomes lower than the specified value.

According to a ninth aspect of the present disclosure, there is provided an image forming apparatus including: an image carrier; and an exposure unit that exposes the image carrier based on image information, in which the optical scanning device according to any one of the first to eighth aspects is used as the exposure unit.

According to the first aspect of the present disclosure, a fluctuation in an intensity of light caused by the fluctuation in the drive voltage can be suppressed as compared with a case in which the timings of the non-scanning periods in the plurality of light emitting element groups are identical to each other.

According to the second aspect of the present disclosure, the drive unit is easily configured as compared with a case in which the plurality of light emitting element groups spaced from each other are included in an identical set.

According to the third aspect of the present disclosure, the non-scanning period is easily set as compared with a case in which all the sets of all the plurality of light emitting element groups are driven by an identical drive unit.

According to the fourth aspect of the present disclosure, the drive unit can reduce an influence on an image quality caused by varying the scanning period of each set of the light emitting element group as compared with a case in which the interval from the scanning period to the next scanning period is divided unevenly in accordance with the number of sets of the light emitting element groups.

According to the fifth aspect of the present disclosure, the drive unit can further reduce an influence of the fluctuation in the drive voltage as compared with a case in which the fluctuation in the drive voltage is not taken into consideration in the variation in the timing of the non-scanning period.

According to the sixth aspect of the present disclosure, the influence of the fluctuation in the drive voltage can be easily reduced as compared with a case in which the fluctuation in the drive voltage that occurs during the non-scanning period is not clear.

According to the seventh aspect of the present disclosure, the drive unit can further reduce the influence of the fluctuation in the drive voltage as compared with a case in which each set of the light emitting element groups is driven before the fluctuation in the drive voltage converges.

According to the eighth aspect of the present disclosure, the drive unit can offset an influence of the drive voltage being lower than the specified value as compared with a case in which the next set of the light emitting element groups is caused to emit light in a case in which the drive voltage exceeds the specified value.

According to the ninth aspect of the present disclosure, the fluctuation in the intensity of light caused by the fluctuation in the drive voltage can be suppressed, and the image quality can be improved, as compared with a case in which the optical scanning device according to any one of the first to eighth aspects is not used as the exposure unit.

BRIEF DESCRIPTION OF THE DRAWINGS

Exemplary embodiment(s) of the present invention will be described in detail based on the following figures, wherein:

Fig. 1 is an overall configuration diagram showing an image forming apparatus to which an example of an optical scanning device according to Exemplary Embodiment 1 of the present invention is applied;
Fig. 2 is a cross-sectional configuration diagram showing an LED print head as an example of the optical scanning device according to Exemplary Embodiment 1 of the present invention;
Fig. 3 is a configuration diagram showing an LED circuit board according to Exemplary Embodiment 1 of the present invention;
Fig. 4 is a configuration diagram showing an arrangement state of LEDs in an SLED chip;
Figs. 5A and 5B are diagrams showing a scanning exposure state of a photosensitive drum by the LED print head;
Fig. 6 is an equivalent circuit diagram showing the SLED chip;
Fig. 7 is a circuit diagram showing a transfer thyristor;
Fig. 8 is a timing chart showing a drive state of the SLED chip;
Fig. 9 is a timing chart showing the drive state of the SLED chip;
Fig. 10 is a block diagram showing a signal generation circuit;
Figs. 11A and 11B are wiring diagrams showing a connection between the SLED chip and the signal generation circuit;
Figs. 12A and 12B are graphs showing control of an exposure amount in the SLED chip;
Fig. 13 is a graph showing speed-up in an exposure speed in the LED print head;
Figs. 14A and 14B are diagrams showing an image defect in an LED print head in the related art;
Fig. 15 is a schematic diagram showing an example of an image defect;
Fig. 16 is a schematic configuration diagram showing the LED print head according to Exemplary Embodiment 1 of the present invention;
Fig. 17 is a timing chart showing a line sync signal of the LED print head according to Exemplary Embodiment 1 of the present invention;
Fig. 18 is a graph showing a change in a drive voltage of the LED print head according to Exemplary Embodiment 1 of the present invention;
Fig. 19 is a schematic configuration diagram showing an LED print head according to Exemplary Embodiment 2 of the present invention;
Fig. 20 is a graph showing a change in a drive voltage of the LED print head according to Exemplary Embodiment 2 of the present invention; and
Fig. 21 is a graph showing a change in a drive voltage of an LED print head in the related art.

DETAILED DESCRIPTION OF THE INVENTION

Hereinafter, exemplary embodiments of the present invention will be described with reference to the accompanying drawings.

[Exemplary Embodiment 1]

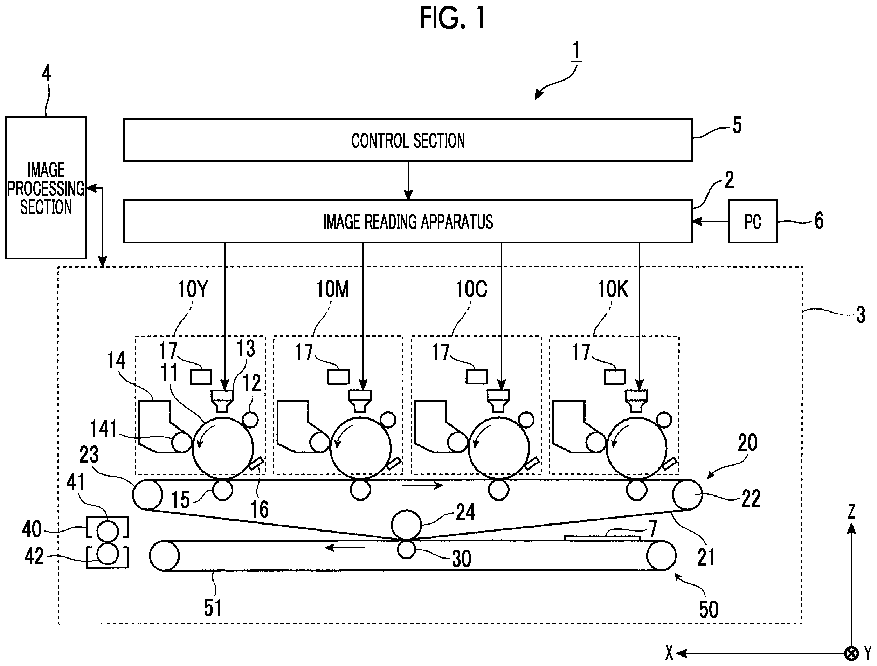

Fig. 1 is a configuration diagram showing an overall configuration of an image forming apparatus to which an optical scanning device according to Exemplary Embodiment 1 of the present invention is applied. In the drawing, a reference numeral X indicates a horizontal direction of the image forming apparatus, a reference numeral Y indicates a depth direction of the image forming apparatus, and a reference numeral Z indicates a vertical direction of the image forming apparatus.

<Overall Configuration of Image Forming Apparatus>

An image forming apparatus 1 according to Exemplary Embodiment 1 is configured as, for example, a so-called tandem-type color printer. As shown in Fig. 1, the image forming apparatus 1 includes, broadly, an image processing section 2, an image forming section 3, and a control section 4. The image forming apparatus 1 is connected to, for example, an image reading apparatus 5 or a personal computer (PC) 6 as an external apparatus. The image forming apparatus 1 may integrally include the image reading apparatus 5 in an upper portion or the like of an apparatus body. The image processing section 2 performs predetermined image processing on image data (image information) input from the image reading apparatus 5, the personal computer (PC) 6, or the like. The image forming section 3 forms an image corresponding to the image data of each color subjected to the image processing by the image processing section 2. The control section 4 acquires various types of information indicating an operating state of the image forming apparatus 1 and comprehensively controls the operation of the image forming apparatus 1.

The image forming section 3 includes a plurality of image forming units 10, an intermediate transfer device 20, a paper transport device 50, a fixing device 40, and the like. The plurality of image forming units 10 form a toner image developed with toner constituting a developer. The intermediate transfer device 20 holds each toner image formed by each image forming unit 10 and transports the toner image to a secondary transfer position for secondary transfer of the toner image to recording paper 7 as an example of a recording medium finally. The paper transport device 50 transports required recording paper 7 to be transported to the secondary transfer position of the intermediate transfer device 20. The recording paper 7 is supplied from a paper feeding device (not shown). The fixing device 40 fixes the toner image on the recording paper 7.

The image forming unit 10 includes four image forming units 10Y, 10M, 10C, and 10K that each exclusively form toner images of four colors of yellow (Y), magenta (M), cyan (C), and black (K). The four image forming units 10 (Y, M, C, and K) are arranged along the horizontal direction X in an internal space of the image forming apparatus 1.

Each of the image forming units 10 (Y, M, C, and K) includes a photosensitive drum 11 as an example of an image carrier, a charging device 12, an exposure device 13 as an example of an exposure unit, a development device 14, a primary transfer device 15, a drum cleaning device 16, and the like. The charging device 12 charges a peripheral surface (image holding surface) of the photosensitive drum 11, on which an image can be formed, to a required potential. The exposure device 13 irradiates the charged peripheral surface of the photosensitive drum 11 with light based on the image data to form an electrostatic latent image for each color having a potential difference. The development device 14 develops the electrostatic latent image with toner of the developer of the corresponding colors (Y, M, C, and K), to obtain the toner image. The primary transfer device 15 transfers each toner image to the intermediate transfer device 20 at a primary transfer position. The drum cleaning device 16 removes and cleans attachments, such as toner, remaining on and adhering to the image holding surface of the photosensitive drum 11 after the primary transfer.

As shown in Fig. 1, the intermediate transfer device 20 is disposed to be present at a lower position along the vertical direction Z of each of the image forming units 10 (Y, M, C, and K). The intermediate transfer device 20 mostly includes an intermediate transfer belt 21, a plurality of belt support rolls 22 to 24, a secondary transfer device 30, and a belt cleaning device (not shown).

The paper transport device 50 transports the recording paper 7 supplied from the paper feeding device (not shown) to the secondary transfer position. In addition, the paper transport device 50 transports the recording paper 7, on which the toner image of each color is transferred at the secondary transfer position, to the fixing device 40. In the shown example, the paper transport device 50 is shown as a belt form device including a paper transport belt 51, but the paper transport device 50 may include a plurality of paper transport roll pairs and the like.

The fixing device 40 is configured by disposing a rotating body for heating 41, a rotating body for pressurization 42, and the like. In the fixing device 40, a contact portion where the rotating body for heating 41 and the rotating body for pressurization 42 make a contact is a fixing treatment portion that performs a required fixing treatment (heating and pressurization).

<Operation of Image Forming Apparatus>

Hereinafter, a basic image forming operation using the image forming apparatus 1 will be described.

Here, an operation in a full-color mode in which a full-color image formed by combining the toner images of four colors (Y, M, C, and K) is formed using the four image forming units 10 (Y, M, C, and K) will be described.

The image forming apparatus 1 receives the image data and command information for requesting the full-color image forming operation (printing) from the image reading apparatus 5, the personal computer 6, or the like. In this case, the control section 4 starts the four image forming units 10 (Y, M, C, and K), the intermediate transfer device 20, the secondary transfer device 30, the fixing device 40, and the like.

In each of the image forming units 10 (Y, M, C, and K), as shown in Fig. 1, first, each photosensitive drum 11 rotates in a direction indicated by an arrow. Then, each charging device 12 charges a surface of each photosensitive drum 11 to a required polarity and a required potential. Subsequently, the exposure device 13 irradiates the surface of the photosensitive drum 11 after charging with light being emitted based on the image data obtained by conversion into each of color components (Y, M, C, and K). Then, the electrostatic latent image of each color component, which is formed by a required potential difference, is formed on the surface of each photosensitive drum 11.

Subsequently, the development device 14 of each of the image forming units 10 (Y, M, C, and K) performs development. The development is performed by electrostatically attaching, to the electrostatic latent image of each color component formed on the photosensitive drum 11, the toner of corresponding colors (Y, M, C, and K) charged with a required polarity, which is supplied from a development roll 141. Through the development, the electrostatic latent image of each color component formed on each photosensitive drum 11 is visualized as the toner images of four colors (Y, M, C, and K) developed with the toner of the corresponding color.

Subsequently, the toner image of each color formed on the photosensitive drum 11 of each of the image forming units 10 (Y, M, C, and K) is transported to the primary transfer position. In this case, the primary transfer device 15 performs the primary transfer in a state in which the toner images of the respective colors are sequentially superimposed on the intermediate transfer belt 21, which rotates in a direction indicated by an arrow, of the intermediate transfer device 20.

In addition, in each of the image forming units 10 (Y, M, C, and K) in which the primary transfer ends, the drum cleaning device 16 removes the attachments by scraping off the attachments to clean the surface of the photosensitive drum 11. As a result, each of the image forming units 10 (Y, M, C, and K) is brought into a state in which a next imaging operation can be performed.

Subsequently, the intermediate transfer device 20 holds the toner image subjected to the primary transfer by the rotation of the intermediate transfer belt 21, and transports the held toner image to the secondary transfer position. On the other hand, the paper transport device 50 feeds out and supplies the required recording paper 7 to the secondary transfer position in accordance with a transfer timing in accordance with the imaging operation.

At the secondary transfer position, the secondary transfer device 30 collectively performs the secondary transfer of the toner image on the intermediate transfer belt 21 to the recording paper 7. In the intermediate transfer device 20 in which the secondary transfer ends, a belt cleaning device (not shown) removes and cleans the attachments such as the toner remaining on the surface of the intermediate transfer belt 21 after the secondary transfer.

Subsequently, the recording paper 7 on which the toner image is subjected to the secondary transfer is transported to the fixing device 40 by the paper transport belt 51. In the fixing device 40, the rotating body for heating 41 and the rotating body for pressurization 42 perform a necessary fixing treatment (heating and pressurization) to fix an unfixed toner image on the recording paper 7. Finally, the recording paper 7 on which the fixing ends is discharged to a paper discharge section (not shown).

By the above-described operation, the recording paper 7 on which the full-color image formed by combining the toner images of four colors is formed is output.

<Configuration of Exposure Device>

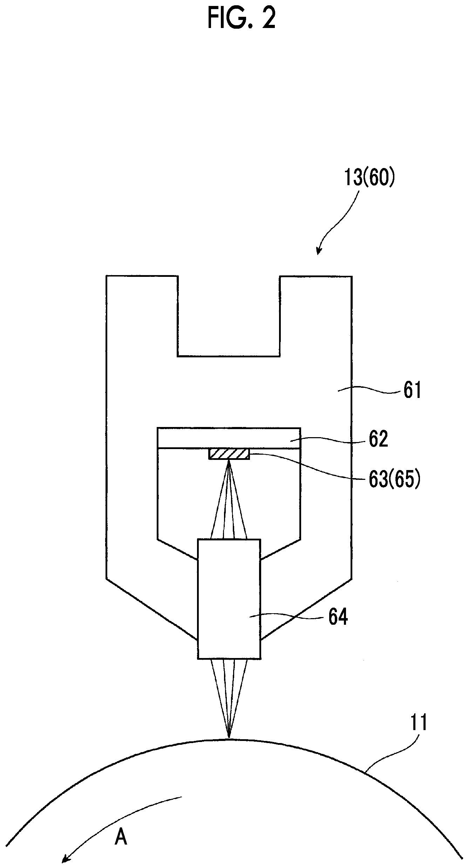

As shown in Fig. 2, the image forming apparatus 1 according to Exemplary Embodiment 1 includes the exposure device 13 as an example of an optical scanning device.

The exposure device 13 is disposed over an image forming region along an axial direction (direction orthogonal to the drawing) of the photosensitive drum 11 so as to face the photosensitive drum 11 as an example of a scanning target object. The exposure device 13 consists of a light emitting diode print head (LED print head) 60 as an example of a scanning unit in which LEDs as a plurality of light emitting elements are arranged along a main scanning direction that is the axial direction of the photosensitive drum 11. The LED print head 60 performs scanning exposure of the surface of the photosensitive drum 11, which is charged to the required potential by the charging device 12 and is rotationally driven at a required rotation speed (circumferential speed), with light corresponding to the image information to form the electrostatic latent image.

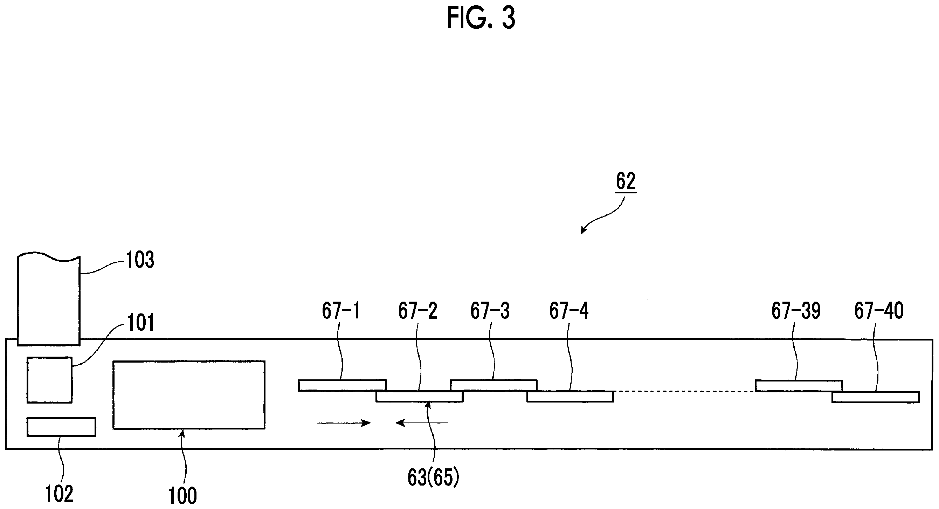

The LED print head 60 includes a housing 61 as a support, an LED circuit board 62, a rod lens array 64, and the like. As shown in Fig. 3, the LED circuit board 62 is equipped with an LED array 63 including a plurality of LEDs arranged along the main scanning direction, and a signal generation circuit 100 as an example of a drive unit that drives the LED array 63.

In the LED print head 60, a self-scanning light emitting device (LED) (hereinafter, referred to as an "SLED") 65 is used as the LED array 63.

The rod lens array 64 is an optical component that forms an image of the light from the SLED 65, on the surface of the photosensitive drum 11. The housing 61 holds the rod lens array 64 and shields the SLED 65 from the outside for protection.

The housing 61 is formed in a long frame shape or a block shape extending along a direction intersecting the drawing, with a metal such as aluminum or SUS, a synthetic resin having heat resistance, or the like. The LED circuit board 62 is disposed on an end surface of the housing 61 facing the photosensitive drum 11. The housing 61 holds the LED circuit board 62 and the rod lens array 64. In this case, the housing 61 matches a light emission point of the SLED 65 provided on the LED circuit board 62 with a focus of one end portion of the rod lens array 64 in an optical axis direction (in the drawing, an up-down direction).

The LED print head 60 configured in this manner can move along the optical axis direction of the rod lens array 64 by an adjustment screw (not shown). The LED print head 60 is set such that an image formation position (focal plane) of the other end portion of the rod lens array 64 along the optical axis direction is located on the surface of the photosensitive drum 11.

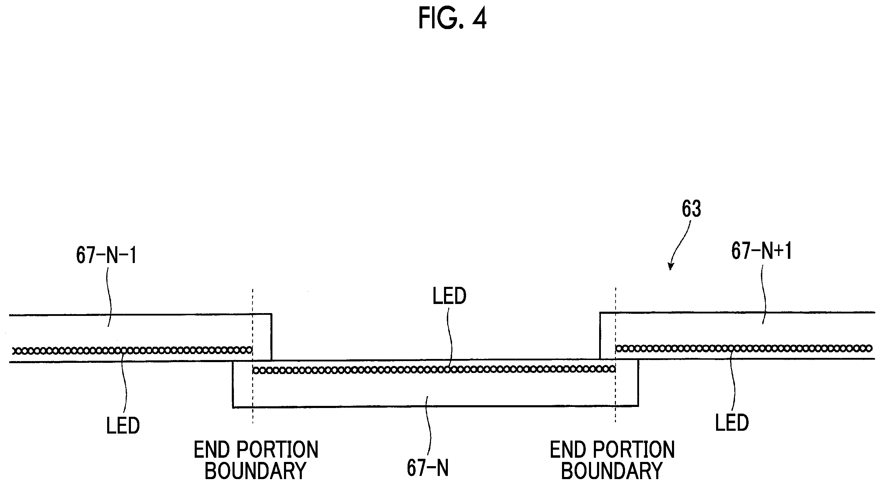

As shown in Fig. 3, in the LED circuit board 62, SLED chips 67-1 to 67-40 as an example of a plurality of (for example, 40) light emitting element groups constituting the SLED 65 are accurately disposed in a straight line to be parallel to the axial direction of the photosensitive drum 11. LEDs as an example of a plurality of (for example, 256) light emitting elements are arranged in each of the SLED chips 67-1 to 67-40. The SLED chips 67-1 to 67-40 are alternately disposed in a staggered pattern. In this case, as shown in Fig. 4, the SLED chips 67-1 to 67-40 are disposed such that the LEDs of each of the SLED chips 67-1 to 67-40 are consecutive at equal intervals at adjacent end portions.

In addition, as shown in Fig. 3, the LED circuit board 62 includes a signal generation circuit 100, a power supply circuit 101, an EEPROM 102 as an example of a storage unit, and a harness 103 at one end portion of the SLED chips 67-1 to 67-40 along a longitudinal direction. The signal generation circuit 100 generates a signal (lighting signal) for driving each of the SLED chips 67-1 to 67-40. The power supply circuit 101 includes a constant voltage power supply such as a three-terminal regulator that outputs a predetermined voltage to each of the SLED chips 67-1 to 67-40. The EEPROM 102 stores an intensity-of-light unevenness correction value and the like of each of the SLED chips 67-1 to 67-40. The harness 103 transmits and receives various signals between the signal generation circuit 100 and the control section 4 and the image processing section 2.

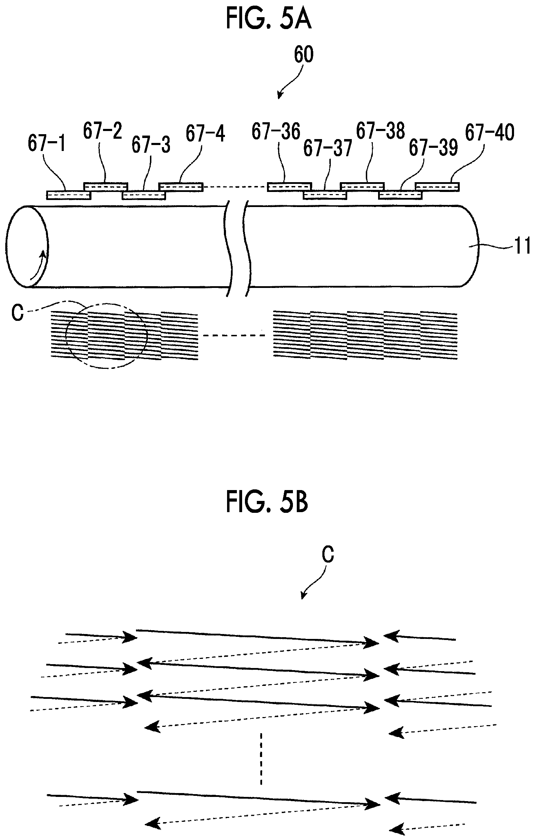

As shown in Figs. 5A and 5B, in a case in which the surface of the photosensitive drum 11 is subjected to image exposure based on the image data, the LED print head 60 drives each of the SLED chips 67-1 to 67-40 simultaneously for each line. In a case in which the scanning exposure of one line ends, each of the SLED chips 67-1 to 67-40 starts the scanning exposure of the next line with a required pause period. In Fig. 5B, an arrow indicated by a broken line indicates a state in which the position of the scanning exposure moves with the pause period.

In the shown example, as shown in Fig. 5B, a case is shown in which each of the SLED chips 67-1 to 67-40 performs the scanning exposure in an identical direction, that is, from a left end portion to a right end portion in the drawing. However, the configuration is not limited thereto, and each of the SLED chips 67-1 to 67-40 may be configured such that the adjacent SLED chips 67-1 to 67-40 perform the scanning exposure in opposite directions, for example, the first SLED chip 67-1 may perform the scanning exposure from the left end portion to the right end portion in the drawing, and the second SLED chip 67-2 may perform the scanning exposure from the right end portion to the left end portion in the drawing.

<SLED Chip>

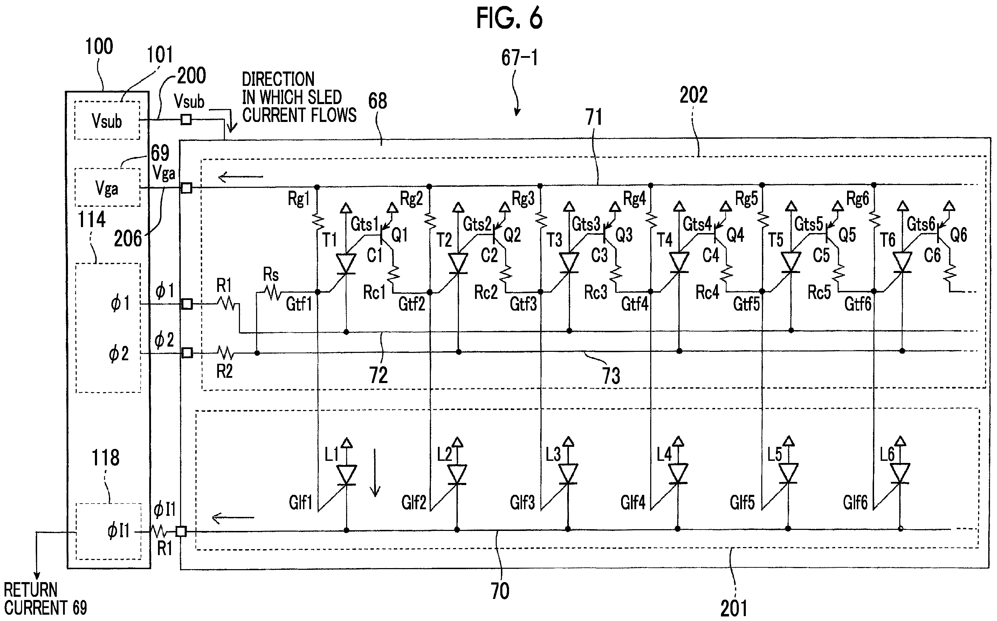

Fig. 6 is an equivalent circuit diagram showing a circuit configuration of the SLED chip mounted on the LED print head according to Exemplary Embodiment 1. As shown in Fig. 6, the SLED chip 67 includes a plurality of (four in the shown example) terminals (φ1 terminal, φ2 terminal, Vga terminal, and φI terminal) on a substrate 68. In addition, a Vsub terminal is provided on a back surface of the substrate 68. Here, the first SLED chip 67-1 will be described as an example in a relationship with the signal generation circuit 100. The other SLED chips 67-2 to 67-40 are configured in the same manner as the SLED chip 67-1.

As shown in Fig. 6, the SLED chip 67-1 is largely classified into a light emitting section 201 and a transfer section 202. The light emitting section 201 of the SLED chip 67-1 includes a plurality of light emitting thyristors L1, L2, L3, and the like as an example of a plurality of light emitting elements arranged linearly on the substrate 68. In addition, the transfer section 202 of the SLED chip 67-1 includes a plurality of transfer thyristors T1, T2, T3, and the like that are linearly arranged on the substrate 68 to correspond to the plurality of light emitting thyristors L1, L2, L3, and the like.

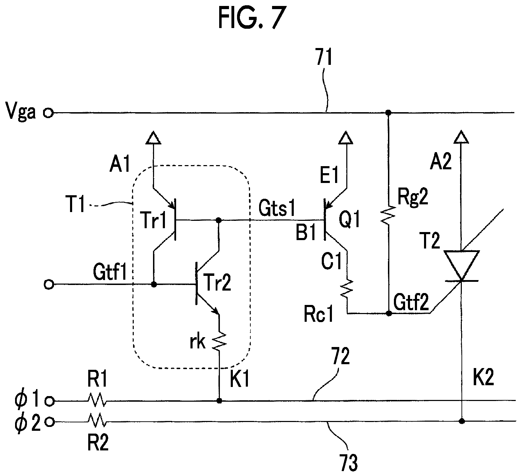

The plurality of light emitting thyristors L1, L2, L3, and the like and the plurality of transfer thyristors T1, T2, T3, and the like are formed as semiconductor elements having a normal first gate Glf on a cathode side and having a first gate Gtf and a second gate Gts on an anode side, on the substrate 68 consisting of an Si substrate or the like. Fig. 7 is a circuit diagram in which the transfer thyristor T1 is replaced with a transistor. Since second gates Gls of the light emitting thyristors L1, L2, L3, and the like are not connected to other elements, the second gate Gls are not shown.

As shown in Fig. 6, each anode of the plurality of light emitting thyristors L1, L2, L3, and the like and the plurality of transfer thyristors T1, T2, T3, and the like is connected to the Vsub terminal wired on the back surface of the substrate 68. The Vsub terminal is connected to the power supply circuit 101 of the LED circuit board 62 via a power supply line 200. In Exemplary Embodiment 1, the power supply circuit 101 is set to "H" (3.3 V). Therefore, the potential of the Vsub terminal is "H" (3.3 V). The lighting current flows to the Vsub terminal of the SLED chip 67-1 from the power supply circuit 101 via the power supply line 200. The lighting currents of the plurality of light emitting thyristors L1, L2, L3, and the like flow from the Vsub terminal to the anodes of the respective light emitting thyristors L1, L2, L3, and the like and flow from the cathodes via the respective light emitting thyristors L1, L2, L3, and the like to a reference potential supply section 69 as a return power supply via the lighting signal line 70 and lighting time control and drive sections 118-1 to 118-40 of the signal generation circuit 100. Here, the potential of the Vsub terminal is "H" (3.3 V), and the potential of the Vga terminal is "L" (0 V). However, in the description of the operation of the SLED chip 67-1, the potential of the Vsub terminal may be referred to as "H" (0 V), and the potential of the Vga terminal may be referred to as "L" (-3.3 V).

The cathodes of the plurality of light emitting thyristors L1, L2, L3, and the like are connected to the lighting signal line 70. The lighting signal line 70 is connected to a φl1 terminal of the SLED chip 67-1. The φl1 terminal of the SLED chip 67-1 is connected to the lighting time control and drive section 118 of the signal generation circuit 100 via a current limiting resistor Rl. A lighting signal φl1 for controlling whether or not each of the light emitting thyristors L1, L2, L3, and the like lights up and a lighting time is transmitted from the lighting time control and drive section 118. The lighting signal φl1 supplies a current for lighting to the light emitting thyristors L1, L2, L3, and the like. Here, for convenience, a terminal and a signal or a terminal and a voltage applied to the terminal are represented by the same reference numeral.

As shown in Fig. 6, the first gate Glfn of each of the plurality of light emitting thyristors L1, L2, L3, and the like is connected to a power supply line 71 via a resistor Rgn. The power supply line 71 is connected to the Vga terminal of the SLED chip 67-1. The Vga terminal is connected to the reference potential supply section 69 as the return power supply via a reference potential line 206. A reference voltage Vga of the reference potential supply section 69 is set to, for example, -3.3 V.

Meanwhile, the cathodes of odd-numbered transfer thyristors T1, T3, T5, and the like among the plurality of transfer thyristors T1, T2, T3, and the like are connected to a first transfer signal line 72 to which a first transfer signal φ1 is transmitted. The first transfer signal line 72 is connected to the φ1 terminal of the SLED chip 67 via a current limiting resistor R1 for preventing an excessive current from flowing. The first transfer signal φ1 is transmitted from a timing signal generation section 114 of the signal generation circuit 100 to the φ1 terminal of the SLED chip 67.

In addition, the cathodes of even-numbered transfer thyristors T2, T4, T6, and the like among the plurality of transfer thyristors T1, T2, T3, and the like are connected to a second transfer signal line 73 to which a second transfer signal φ2 is transmitted. The second transfer signal line 73 is connected to the φ2 terminal of the SLED chip 67 via a current limiting resistor R2 for preventing an excessive current from flowing. The second transfer signal φ2 is transmitted from the timing signal generation section 114 of the signal generation circuit 100 to the φ2 terminal of the SLED chip 67.

In the SLED chip 67-1, each of coupling transistors Q1, Q2, Q3, and the like are disposed between two adjacent transfer thyristors Tn and Tn+1. A base of each of the coupling transistors Q1, Q2, Q3, and the like is connected to a second gate Gtsn of the transfer thyristor Tn located in the preceding stage. In addition, a collector terminal of each of the coupling transistors Q1, Q2, Q3, and the like is connected to a first gate Gtfn+1 of the transfer thyristor Tn+1 located in a subsequent stage via a resistor Rcn. The base of each of the coupling transistors Q1, Q2, Q3, and the like is connected to Vsub terminal wired on the back surface of the substrate 68.

Further, a first gate Gtf1 of the first transfer thyristor T1 is connected to the second transfer signal line 73 located at the subsequent stage of the current limiting resistor R2 via a start resistor Rs.

<Operation of SLED Chip>

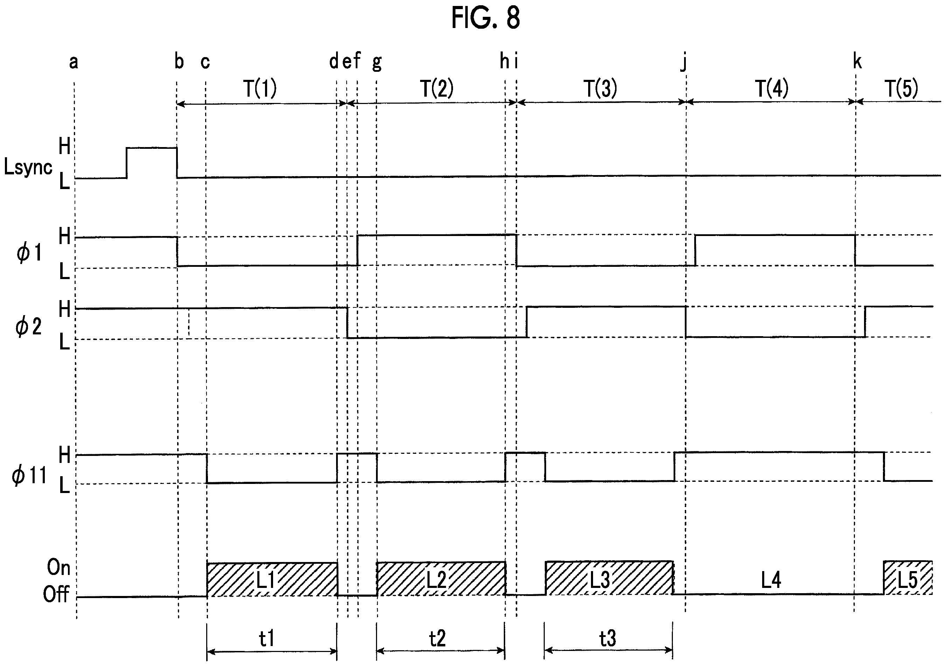

Fig. 8 is a timing chart showing the operation of the SLED chip 67 of the LED print head 60 according to Exemplary Embodiment 1.

Fig. 8 shows a timing chart for controlling lighting or non-lighting of first to fifth five light emitting thyristors L1 to L5 among a plurality of (for example, 256) light emitting thyristors L1 to L256 of the SLED chip 67. In Fig. 8, the light emitting thyristors L1, L2, L3, and L5 of the SLED chip 67 light up, and the light emitting thyristor L4 does not light up.

In a plurality of SLED chips 67-1 to 67-40 disposed on the LED circuit board 62, the other SLED chips 67-2 to 67-40 are driven simultaneously in parallel with the SLED chip 67-1 as shown in Figs. 5A and 5B. Here, the operation of the first SLED chip 67-1 will be described.

First, in a case in which the image exposure by the LED print head 60 is started, a line sync signal Lsync is transmitted from the control section 4 to the timing signal generation section 114 of the signal generation circuit 100. The line sync signal Lsync consists of, for example, a signal that rises from a state of "L" to a state of "H" and then falls from the state of "H" to the state of "L" for each line in a case of performing scanning exposure of the surface of the photosensitive drum 11. In a state before the line sync signal Lsync falls, as shown at a time point a in Fig. 8, both the first and second transfer signals φ1 and φ2 and the lighting signal φl1 are "H" (0 V).

In this case, as shown in Fig. 6, the transfer section 202 of the SLED chip 67 is connected to the first transfer signal line 72 in which the respective cathodes of the odd-numbered transfer thyristors T1, T3, T5, and the like are set to "H". Similarly, the respective cathodes of the even-numbered transfer thyristors T2, T4, T6, and the like are connected to the second transfer signal line 73 set to "H". Therefore, the transfer thyristors T1, T3, T5, and the like and the transfer thyristors T2, T4, T6, and the like are in an OFF state since both the anode and the cathode are "H".

On the other hand, the respective cathodes of the light emitting thyristors L1, L2, L3, and the like are connected to the lighting signal line 70 set to "H". Accordingly, the light emitting thyristors L1, L2, L3, and the like are also in an OFF state since both the anode and the cathode are "H".

In this case, as shown in Fig. 6, in the first transfer thyristor T1 in the transfer section 202, the first gate Gtf1 is connected to the power supply line 71 of "L" (-3.3 V) via a resistor Rg1. In addition, in the first transfer thyristor T1, the first gate Gtf1 is connected to the second transfer signal line 73 of "H" (0 V) via the start resistor Rs.

Therefore, in the first transfer thyristor T1, the potential of the first gate Gtf1 is a potential obtained by dividing a potential difference between "L" (-3.3 V) of the power supply line 71 and "H" (0 V) of the second transfer signal line 73 by the resistor Rg1, the start resistor Rs, and the current limiting resistor R2. In a case in which the resistor Rg1 is set to have 10 k$\Omega$, the start resistor Rs is set to have 2 k$\Omega$, and the current limiting resistor R2 is set to have 300 $\Omega$, the potential of the first gate Gtf1 is -0.62 V. Since Vgtf - Vd, a threshold voltage of the first transfer thyristor T1 is -0.62-1.5=-2.12 V. Here, Vd is a diffusion potential (for example, 1.5 V) of the first transfer thyristor T1. As described above, the potential of the first gate Gtf1 of the first transfer thyristor T1 is set by the voltage of "L" (-3.3 V) of the power supply line 71 and the resistance values of the resistor Rg1, the start resistor Rs, and the current limiting resistor R2. In addition, in the first light emitting thyristor L1, a first gate Glf1 is connected to the first gate Gtf1 of the first transfer thyristor T1, so that the threshold voltage is -2.12 V in the same manner.

In this case, since the first transfer thyristor T1 is in an OFF state, the coupling transistor Q1 is in an OFF state. Therefore, in the second transfer thyristor T2, a first gate Gtf2 is connected to "L" (-3.3 V), which is the potential of the power supply line 71, via the resistor Rg2. Therefore, the threshold voltage of the second transfer thyristor T2 is -3.3 V - 1.5 = -4.8 V. Similarly, the threshold voltages of the third and subsequent transfer thyristors T3, T4, and T5 are also -4.8 V.

Next, in the SLED chip 67, as shown at a time point b in Fig. 8, in a case in which the line sync signal Lsync falls to the "L" state, the first transfer signal $\varphi$1 output from the timing signal generation section 114 of the signal generation circuit 100 is changed from "H" to "L" in synchronization with the falling. Then, as shown in Fig. 6, the first transfer thyristor T1 having the threshold voltage of -2.12 V is turned on since the first transfer signal line 72, that is, the cathode is "L" (-3.3 V). However, in the third and subsequent odd-numbered transfer thyristors T, the cathode is connected to the first transfer signal line 72, but the threshold voltage is -4.8 V as described above, so that the third and subsequent odd-numbered transfer thyristors T remain in an OFF state without being turned on. On the other hand, the even-numbered transfer thyristors T2, T4, T6, and the like are not turned on since the second transfer signal line 73 remains in "H" (0 V).

In the first transfer thyristor T1 in an ON state, the first gate Gtf1 is a saturation potential Vc of the transistor Tr1 as shown in Fig. 7. Here, the saturation potential Vc is -0.2 V as an example. Therefore, in the first transfer thyristor T1, the first gate Gtf1 is -0.2 V, and the second gate Gts1 is a potential (-1.5 V) obtained by subtracting a diffusion potential Vd (1.5 V) from an anode A1 ("H" (0 V)).

In addition, in the first transfer thyristor T1 in an ON state, a current flows from the anode A1 ("H" (0 V)) to the terminal $\varphi$1 ("L" (-3.3 V)) to which a cathode K1 is connected. Therefore, a potential Vk of the cathode K1 of the first transfer thyristor T1 in an ON state is represented by the following expression (1) based on an internal resistor rk (resistance value is rk) of the first transfer thyristor T1 in an ON state, the current limiting resistor R1 (resistance value is R1), and the diffusion potential Vd.

$$Vk = (Vga + Vd) \times \{rk/(R1 + rk)\} - Vd \ (1)$$

For example, in a case in which the current limiting resistor R1 is set to have 300 $\Omega$, and the internal resistor rk is set to have 60 $\Omega$, the potential Vk of the cathode K1 is -1.8 V. The potential Vk of the cathode K1 is a potential of the first transfer signal line 72.

As described above, the first gate Gtf1 of the first transfer thyristor T1 is -0.2 V. In the first light emitting thyristor L1, since the first gate Glf1 is connected to the first gate Gtf1 (-0.2 V) of the first transfer thyristor T1, the threshold voltage is -0.2 - 1.5 = -1.7 V.

On the other hand, in a case in which the first transfer thyristor T1 is turned on, the coupling transistor Q1 transitions from an OFF state to an ON state. As a result, in the second transfer thyristor T2, the first gate Gtf2 transitions to -0.72 V, and the threshold voltages of the second transfer thyristor T2 and the second light emitting thyristor L2 are -2.22 V. However, since the second transfer signal line 73 is "H" (0 V), the second transfer thyristor T2 is not turned on. Since the lighting signal line 70 is "H" (0 V), the second light emitting thyristor L2 is also not turned on.

Since the second transfer thyristor T2 is in an OFF state, the coupling transistor Q2 is in an OFF state. Accordingly, in the third transfer thyristor T3, a first gate Gtf3 is "L" (-3.3 V), and the threshold voltages of the third transfer thyristor T3 and the third light emitting thyristor L3 are -4.8 V. Similarly, the threshold voltages of the transfer thyristor T and the light emitting thyristor L that have a number of 4 or more are -4.8 V.

Immediately after the time point b (here, a time point of reaching a steady state after a change in the potential of the signal at the time point b causes a change in the thyristor or the like), the first transfer thyristor T1 and the coupling transistor Q1 are in an ON state, and the other transfer thyristors T, the other coupling transistors Q, and all the light emitting thyristors L are in an OFF state.

Thereafter, as shown in Fig. 8, at a time point c, the lighting signal φl1 transitions from "H" to "L". Then, as shown in Fig. 6, the lighting signal line 70 transitions from "H" (0 V) to "L" (-3.3 V) via the current limiting resistor RI and the φI terminal. In this case, the first light emitting thyristor L1 having the threshold voltage of -1.7 V is turned on and lights up (emits light). As a result, the lighting signal line 70 is -1.86 V.

As described above, the second light emitting thyristor L2 has the threshold voltage of -2.22 V, but the first light emitting thyristor L1 having the high threshold voltage of -1.7 V is turned on, and the lighting signal line 70 has 1.86 V, so that the second light emitting thyristor L2 is not turned on.

Immediately after the time point c, the first transfer thyristor T1 and the first coupling transistor Q1 are in an ON state, and the first light emitting thyristor L1 lights up in an ON state.

Next, at a time point d, the lighting signal φl1 transitions from "L" to "H". Then, the lighting signal line 70 transitions from -1.86 V to "H" (0 V) via the current limiting resistor RI and the φI terminal. Then, in the first light emitting thyristor L1, both the anode and the cathode are "H", are turned off, and are extinguished. A lighting period t1 of the first light emitting thyristor L1 is a period from the time point c at which the lighting signal φl1 transitions from "H" to "L" to the time point d at which the lighting signal φl1 transitions from "L" to "H". Therefore, the lighting period t1 of the first light emitting thyristor L1 is controlled by a time for which the lighting signal φl1 maintains the "L" state based on the image data or the like. Immediately after the time point d, the first transfer thyristor T1 and the first coupling transistor Q1 are in an ON state.

Further, at a time point e, the second transfer signal φ2 transitions from "H" to "L". Here, a period T(1) for lighting control of the first light emitting thyristor L1 ends, and a period T(2) for lighting control of the second light emitting thyristor L2 is started. As a result, the φ2 terminal transitions from "H" to "L" (-3.3 V). Since the first transfer thyristor T1 is in an ON state, the first gate Gtf1 of the first transfer thyristor T1 has -0.2 V. Therefore, the second transfer signal line 73 has a value obtained by dividing a potential difference between "L" (-3.3 V) and -0.2 V by the start resistor Rs (2 kΩ) and the current limiting resistor R2 (300 Ω). That is, the second transfer signal line 73 has -2.9 V.

At the time point b, the threshold voltage is -2.22 V, and thus the second transfer thyristor T2 is turned on. As a result, in the second transfer thyristor T2, the first gate Gtf2 (first gate Glf2) has -0.2 V, and the second light emitting thyristor L2 has the threshold voltage of -1.7 V. Then, in a case in which the second transfer thyristor T2 is turned on, the second transfer signal line 73 is -1.8 V.

Further, by turning on the second transfer thyristor T2, the second coupling transistor Q2 transitions from an OFF state to an ON state, and the first gate Gtf3 of the third transfer thyristor T3 has -0.72 V. Accordingly, the threshold voltages of the third transfer thyristor T3 and the third light emitting thyristor L3 are -2.22 V. The threshold voltages of the transfer thyristor T and the light emitting thyristor L that have a number of 4 or more are maintained at -4.8 V. Since the lighting signal φl1 is "H" (0 V), none of the light emitting thyristors L is turned on. Immediately after the time point e, the first and second transfer thyristors T1 and T2 and the first and second coupling transistors Q1 and Q2 are in an ON state.

Thereafter, at a time point f, the first transfer signal φ1 transitions from "L" to "H". In this case, the potential of the first transfer signal line 72 transitions from "L" to "H" via the φ1 terminal. Then, both the anode and the cathode of the first transfer thyristor T1 in an ON state transition to "H", and the transfer thyristor T1 is turned off.

The first gate Gtf1 (first gate Glf1) is connected to the power supply line 71 ("L" (-3.3 V)) via the resistor Rg1, and is connected to the second transfer signal line 73 which is "L" (-3.3 V) via the start resistor Rs. Accordingly, in the first transfer thyristor T1, the first gate Gtf1 (first gate Glf1) transitions from -0.2 V to "L" (-3.3 V), and the threshold voltages of the first transfer thyristor T1 and the first light emitting thyristor L1 are -4.8 V. Immediately after the time point f, the second transfer thyristor T2 is in an ON state.

Thereafter, at a time point g, in a case in which the lighting signal φl1 transitions from "H" to "L", the second light emitting thyristor L2 is turned on and lights up, as in the first light emitting thyristor L1 at the time point c. Then, at a time point h, in a case in which the lighting signal φl1 transitions from "L" to "H", the second light emitting thyristor L2 is turned off and extinguished, as in the first light emitting thyristor L1 at the time point d.

Further, at a time point i, in a case in which the first transfer signal φ1 transitions from "H" to "L", the third transfer thyristor T3 having the threshold voltage of -2.22 V is turned on, as in the first transfer thyristor T1 at the time point b or the second transfer thyristor T2 at the time point e. In this case, since the threshold voltage is -4.8 V, the first transfer thyristor T1 is not turned on. At the time point i, the period T(2) for lighting control of the second light emitting thyristor L2 ends, and a period T(3) for lighting control of the third light emitting thyristor L3 is started.

In a case in which the light emitting thyristor L does not light up and remains in a non-lighting state, the lighting signal φl1 need only remain at "H" (0 V) as in the lighting signal φl1 in a period T(4) for lighting control of the light emitting thyristor L4 in Fig. 8. As a result, even in a case in which the threshold voltage of the fourth light emitting thyristor L4 is -1.7 V, the fourth light emitting thyristor L4 remains in a non-lighting state.

Hereinafter, until the lighting and non-lighting of the 256th light emitting thyristor L256 are controlled, the above-described process is repeated. In a case in which the control of the lighting and non-lighting of the 256th light emitting thyristor L256 ends, all of the first and second transfer signals φ1 and φ2 and the lighting signal φl1 are "H" (0 V), and the transition to the pause period is performed.

In this case, as shown in Fig. 6, Vsub (0 V) is applied to the Vsub terminal of each SLED chip 67 via the power supply line 200 by the power supply circuit 101 consisting of the constant voltage power supply. The lighting current flows to the φl1 terminal from the anodes, which are "H" (0 V), of the light emitting thyristors L1, L2, L3, and the like that light up by the lighting signal φl1 of each SLED chip 67 transitioning to "L" via the lighting signal line 70.

The lighting currents flowing toward the light emitting thyristors L1, L2, L3, and the like change depending on the number of light emitting thyristors L1, L2, L3, and the like that light up simultaneously, a lighting time, a lighting intensity, and the like among the SLED chips 67-1 to 67-40. Here, in order to simplify the description, the lighting intensities of the light emitting thyristors L1, L2, L3, and the like are constant.

Therefore, in the SLED chips 67-1 to 67-40 of the LED print head 60, a large lighting current may flow to the Vsub terminal via the power supply line 200 by the power supply circuit 101 consisting of the constant voltage power supply depending on the lighting state of the light emitting thyristor L located immediately before the pause period. This large lighting current is cut off at the same time as the start of the pause period.

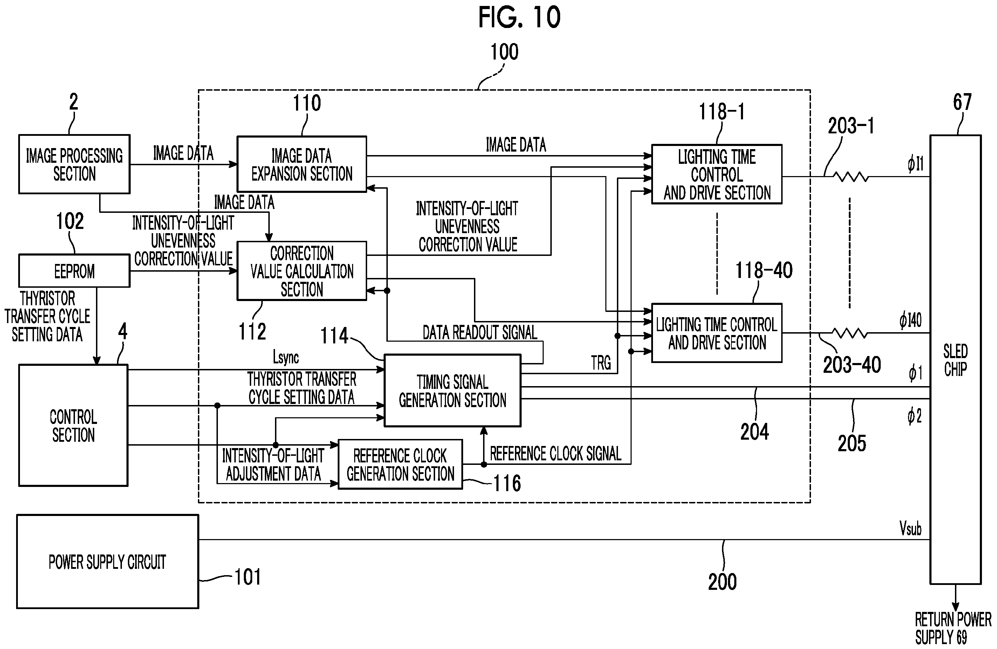

Fig. 10 is a block diagram showing a configuration of the signal generation circuit.

As shown in Fig. 10, the signal generation circuit 100 includes an image data expansion section 110 to which the image data is input from the image processing section 2. The image data expansion section 110 expands the image data input from the image processing section 2 into image data of 256 pixels for each of the SLED chips 67-1 to 67-40 for each line. The image data expanded by the image data expansion section 110 is transmitted to the lighting time control and drive sections 118-1 to 118-40 provided corresponding to the respective SLED chips 67-1 to 67-40.

The signal generation circuit 100 further includes a correction value calculation section 112 to which an intensity-of-light unevenness correction value is input from the EEPROM 102 on the LED circuit board 62. The image data is input to the correction value calculation section 112 from the image processing section 2. The intensity-of-light unevenness correction value is obtained in advance, for example, by actually lighting up each of the SLED chips 67-1 to 67-40 to measure the unevenness in intensity of light at the time of shipment or the like. The correction value calculation section 112 calculates the intensity-of-light unevenness correction value and transmits the calculated intensity-of-light unevenness correction value to the corresponding lighting time control and drive sections 118-1 to 118-40 that drive the corresponding SLED chips 67-1 to 67-40.

The signal generation circuit 100 further includes a timing signal generation section 114 and a reference clock generation section 116. The timing signal generation section 114 receives the line sync signal Lsync, thyristor transfer cycle setting data, and intensity-of-light adjustment data from the control section 4. The thyristor transfer cycle setting data is data for setting a transfer cycle of the thyristor as appropriate in accordance with a printing speed or the like. The timing signal generation section 114 outputs a data readout signal to the image data expansion section 110 and the correction value calculation section 112. In addition, the timing signal generation section 114 outputs a trigger signal TRG for synchronizing the lighting time control and drive sections 118-1 to 118-40. Further, the timing signal generation section 114 outputs the first and second transfer signals φ1 and φ2 to the SLED chips 67-1 to 67-40. The lighting time control and drive sections 118-1 to 118-40 outputs lighting signals φl1 to φl40 to the SLED chips 67-1 to 67-40 in accordance with the image data and the intensity-of-light unevenness correction value data.

The reference clock generation section 116 outputs a reference clock signal to the timing signal generation section 114 and the lighting time control and drive section 118.

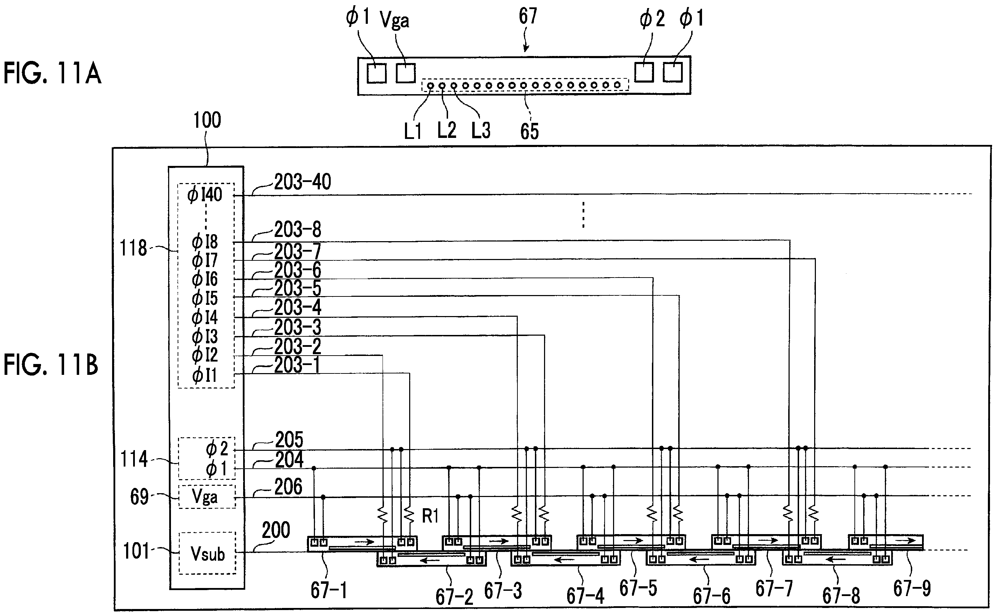

Figs. 11A and 11B are circuit diagrams showing a wiring between the signal generation circuit 100 and each of the SLED chips 67-1 to 67-40.

In each of the SLED chips 67-1 to 67-40, the φl terminal is connected to the corresponding lighting time control and drive sections 118-1 to 118-40 of the signal generation circuit 100 via the current limiting resistor RI by lighting signal lines 203-1 to 203-40. In addition, the φ1 terminal and the φ2 terminal of each of the SLED chips 67-1 to 67-40 are connected to the timing signal generation section 114 of the signal generation circuit 100 via first and second transfer signal lines 204 and 205, respectively. Further, in each of the SLED chips 67-1 to 67-40, the Vsub terminal is connected to the power supply circuit 101 via the power supply line 200, and the Vga terminal is connected to the reference potential supply section 69 via the reference potential line 206.

In the image forming apparatus 1 to which the LED print head 60 configured as described above is applied, an increase in the number of printed sheets per unit time is required to increase the speed in order to achieve high productivity. In order to meet the demand for speed-up in the image forming apparatus 1, it is necessary to increase a process speed defined by the rotation speed of the photosensitive drum 11 in each of the image forming units 10 (Y, M, C, and K). In addition, the LED print head 60 that performs the image exposure on the surface of the photosensitive drum 11 is required to respond to the demand for speed-up by increasing the number of times of lighting per unit time.

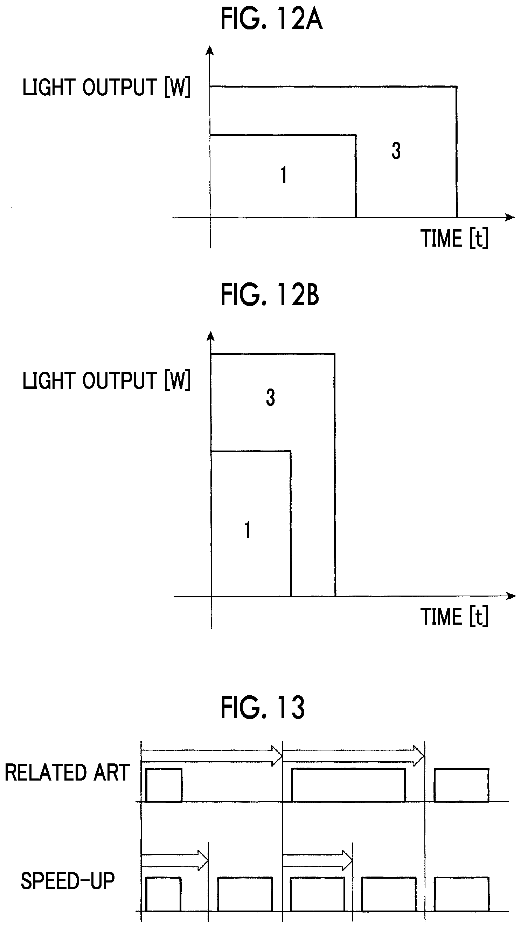

As shown in Figs. 12A and 12B, the LED print head 60 adjusts the exposure amount in a case in which the surface of the photosensitive drum 11 is exposed in accordance with the image data, by using at least one of a maximum light output determined by the drive voltage applied to each LED of the LED print head 60 or a light emission time of each LED. In order to meet the demand for speed-up in the LED print head 60, for example, it is desired to increase the drive voltage applied to each LED and to shorten a scanning time required for exposing one line of the photosensitive drum 11.

In the LED print head 60, as shown in Fig. 13, in order to shorten the scanning time required for exposing one line of the photosensitive drum 11 as the speed increases, it is required to shorten the pause period which is a non-scanning period set between the scanning period and the next scanning period.

As a result, in the LED print head 60, the current that flows through each LED is relatively increased as the drive voltage applied to each LED is increased. In addition, in the pause period set between the scanning period and the next scanning period, a relatively large current flowing through each LED is instantaneously cut off.

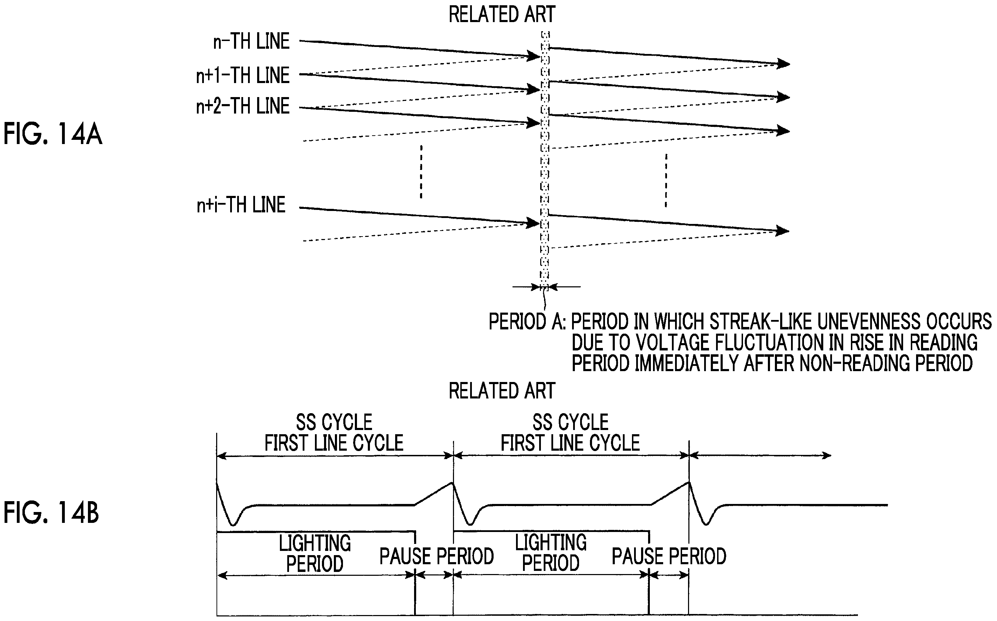

As shown in Fig. 10, in the LED print head 60, the power supply line 200 for applying the drive voltage to each LED has an inductance including electrostatic capacitance from the power supply circuit 101 including a DC-DC converter and the like. Therefore, in the LED print head 60, as shown in Figs. 14A and 14B, the supply current is gently decreased even in a case in which a relatively large current flowing through each LED is instantaneously cut off due to the inductance of the power supply line 200, and thus the voltage of the power supply circuit 101 is rapidly increased due to excessive current. As a result, in a case in which the LED print head 60 ends the pause period and then starts the next line exposure, the voltage of the power supply circuit 101 is high, and then the voltage is rapidly decreased and then returns to a normal voltage.

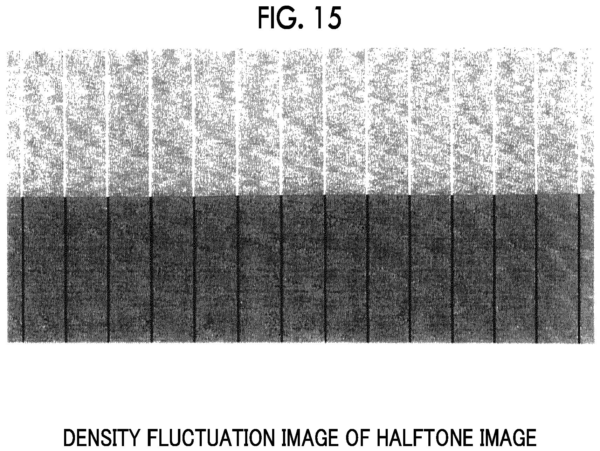

In the LED print head 60 in the related art, the drive voltage fluctuates and the intensity of light of the LED of the LED print head 60 fluctuates at the start of the scanning period immediately after the pause period ends. Therefore, at the start of scanning in the exposure device 13, there is a technical problem in that density unevenness, such as a region with a low density of white streaks or a region with a high density of black streaks, may occur in a halftone image as shown in Fig. 15.

Therefore, in the optical scanning device according to the present exemplary embodiment, the drive unit is configured to divide the plurality of light emitting element groups into a plurality of sets, and vary a timing of the non-scanning period set between the scanning periods in at least two sets of the light emitting element groups divided into the plurality of sets.

In addition, in the optical scanning device according to the present exemplary embodiment, the drive unit is configured to drive each set of the light emitting element groups after the fluctuation in the drive voltage converges.

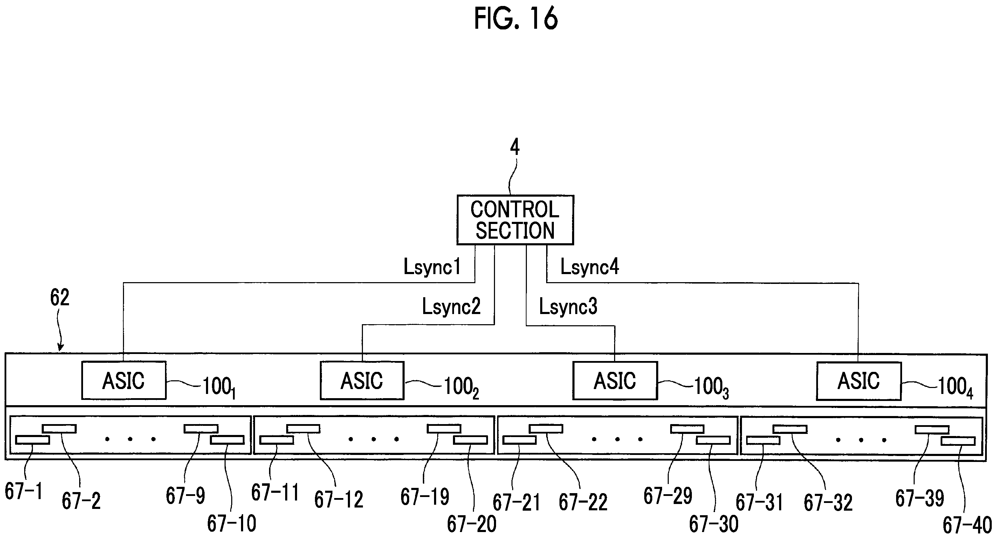

That is, in the LED print head 60 as an example of the optical scanning device according to Exemplary Embodiment 1, as shown in Fig. 16, the plurality of SLED chips 67-1 to 67-40 mounted on the LED circuit board 62 are divided into a plurality of (four in the shown example) sets each including a plurality of (10 in the shown example) groups. A first set of SLED chip groups 301 consists of the SLED chips 67-1 to 67-10. A second set of SLED chip groups 302 consists of the SLED chips 67-11 to 67-20. A third set of SLED chip groups 303 consists of the SLED chips 67-21 to 67-30. A fourth set of SLED chip groups 304 consists of the SLED chips 67-31 to 67-40. In the shown example, there is a gap between the adjacent SLED chip groups, but the LEDs are consecutively disposed as shown in Fig. 4 in the adjacent SLED chip groups.

Each set of the SLED chip groups 301 to 304 includes a plurality of (four in the shown example) signal generation circuits $100_1$ to $100_4$ as an example of the drive unit mounted on the LED circuit board 62 corresponding to each set of the SLED chip groups 301 to 304. The first set of SLED chip groups 301 are driven by the signal generation circuit $100_1$. The second set of SLED chip groups 301 is driven by the signal generation circuit $100_2$. The third set of SLED chip groups 301 is driven by the signal generation circuit $100_3$. The fourth set of SLED chip groups 301 is driven by the signal generation circuit $100_4$. Each of the signal generation circuits $100_1$ to $100_4$ is similarly configured as an application-specific integrated circuit (ASIC). The signal generation circuits $100_1$ to $100_4$ have different timings of the pause period as the non-scanning period set between the scanning periods.

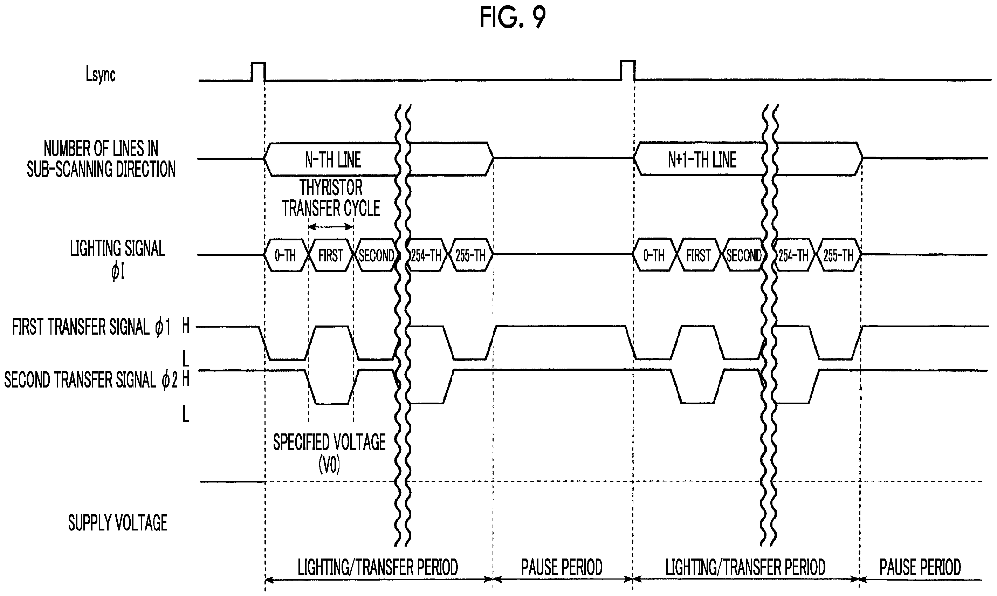

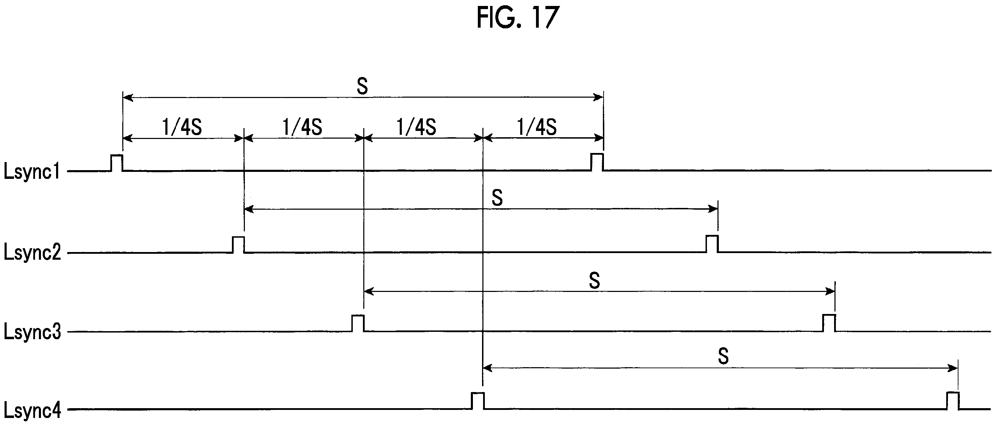

More specifically, each of the signal generation circuits $100_1$ to $100_4$ starts the scanning exposure for each line with reference to the line sync signal Lsync output from the control section 4 as shown in Fig. 9. In this case, as shown in Fig. 17, the control section 4 is configured to shift a timing of outputting the line sync signals Lsync1 to Lsync4 to each of the signal generation circuits $100_1$ to $100_4$ by a time S/4 obtained by dividing the scanning cycle S required for scanning one line on the surface of the photosensitive drum 11 by the number m (= four) of the SLED chip groups 301 to 304. As shown in Fig. 9, the scanning cycle S includes the lighting period and the pause period of each of the SLED chips 67-1 to 67-40.

The lighting of the SLED chips 67-1 to 67-10 belonging to the first set of SLED chip groups 301 is controlled by the signal generation circuit $100_1$ based on the first line sync signal Lsync1 output from the control section 4. In addition, the lighting of the SLED chips 67-11 to 67-20 belonging to the second set of SLED chip groups 302 is controlled by the signal generation circuit $100_2$ based on the second line sync signal Lsync2 output from the control section 4. Further, the lighting of the SLED chips 67-21 to 67-30 belonging to the third set of SLED chip groups 303 is controlled by the signal generation circuit $100_3$ based on the third line sync signal Lsync3 output from the control section 4. Similarly, the lighting of the SLED chips 67-31 to 67-40 belonging to the fourth set of SLED chip groups 304 is controlled by the signal generation circuit $100_4$ based on the fourth line sync signal Lsync4 output from the control section 4.

<Operation of Exposure Device>

In the above-described configuration, in the image forming apparatus to which the LED print head according to Exemplary Embodiment 1 is applied, it is possible to suppress the fluctuation in the intensity of light caused by the fluctuation in the drive voltage as compared with a case in which the timings of the non-scanning periods in the plurality of light emitting element groups are identical to each other.

That is, in the image forming apparatus 1 according to Exemplary Embodiment 1, as shown in Fig. 1, the image data and the command information for requesting the full-color image forming operation (printing) are received from the image reading apparatus 5, the personal computer 6, or the like. In this case, the control section 4 drives the photosensitive drum 11 of each of the image forming units 10 (Y, M, C, and K) and charges the surface of each photosensitive drum 11 by the charging device 12. Thereafter, the surface of each photosensitive drum 11 is irradiated with the light emitted based on the image data obtained by being converted into each of the color components (Y, M, C, and K) by the LED print head 60.

In this case, in the LED print head 60, as shown in Figs. 10 and 16, the SLED chips 67-1 to 67-40 belonging to each set of SLED chip groups 301 to 304 are driven by the signal generation circuits $100_1$ to $100_4$ corresponding to each set of SLED chip groups 301 to 304. In this case, each of the signal generation circuits $100_1$ to $100_4$ controls the lighting and non-lighting, the lighting time, and the like of 256 light emitting thyristors L1 to L256 of each of the SLED chips 67-1 to 67-40 in accordance with the lighting signals $\varphi I$ flowing in the lighting signal lines 203-1 to 203-40 based on the first to fourth line sync signals Lsync1 to Lsync4 individually transmitted from the control section 4 and the image data.

In this case, as shown in Fig. 17, the first to fourth line sync signals Lsync1 to Lsync4 individually transmitted from the control section 4 are sequentially output by being shifted by a time (S/4) obtained by dividing the scanning cycle S including the pause period required for scanning one line on the surface of the photosensitive drum 11 into four equal parts.

Therefore, in the LED print head 60, in a case in which the surface of the photosensitive drum 11 is subjected to the image exposure in accordance with the image data, the signal generation circuit $100_1$ first drives the SLED chips 67-1 to 67-10 belonging to the first set of SLED chip groups 301. Thereafter, in the LED print head 60, the signal generation circuit $100_2$ drives the SLED chips 67-11 to 67-20 belonging to the second set of SLED chip groups 302 based on the second line sync signal Lsync2 output by being shifted by the time (S/4) from the control section 4.

Thereafter, similarly, in the LED print head 60, the signal generation circuit $100_3$ drives the SLED chips 67-21 to 67-30 belonging to the third set of SLED chip groups 303 based on the third line sync signal Lsync3 output by being shifted by the time (S/4) from the control section 4. Finally, in the LED print head 60, the signal generation circuit $100_4$ drives the SLED chips 67-31 to 67-40 belonging to the fourth set of SLED chip groups 304 based on the fourth line sync signal Lsync4 output by being shifted by the time (S/4) from the control section 4.

Hereinafter, the surface of the photosensitive drum 11 is subjected to the image exposure for the number of lines corresponding to one page of the recording paper 7 by the LED print head 60.

In the LED print head 60, as described above, in the pause period set between the scanning period and the next scanning period, the lighting operation ends for each of the SLED chips 67-1 to 67-10, the SLED chips 67-11 to 67-20, the SLED chips 67-21 to 67-30, and the SLED chips 67-31 to 67-40 belonging to each set of the SLED chip groups 301 to 304, and a relatively large current flowing through each SLED chip 67 is instantaneously cut off for each set of the SLED chip groups 301 to 304.

In this regard, in the LED print head 60 in the related art, as shown in Fig. 14B, the supply current is gently decreased even in a case in which a relatively large current flowing through each LED is instantaneously cut off by the inductance of the power supply line 200, and thus the voltage of the power supply circuit 101 is rapidly increased than the specified value due to excessive current. Thereafter, the voltage of the power supply circuit 101 is rapidly decreased to be lower than the specified value and then returns to the normal voltage. Therefore, at the start of the scanning using the LED print head 60, the density unevenness, such as a region with a low density of white streaks or a region with a high density of black streaks, may occur in the halftone image as shown in Fig. 15.

On the other hand, in the LED print head 60 according to Exemplary Embodiment 1, as shown in Fig. 16, the plurality of SLED chips 67-1 to 67-40 are divided into the four SLED chip groups 301 to 304. Moreover, in the SLED chips 67-1 to 67-40 of each of the SLED chip groups 301 to 304, the pause periods are set to be different from each other.

Therefore, the supply current that is supplied and cut off in each of the SLED chips 67-1 to 67-40 via the power supply line 200 by the transition in the pause period is about 1/4 as small as the supply current in the related art.

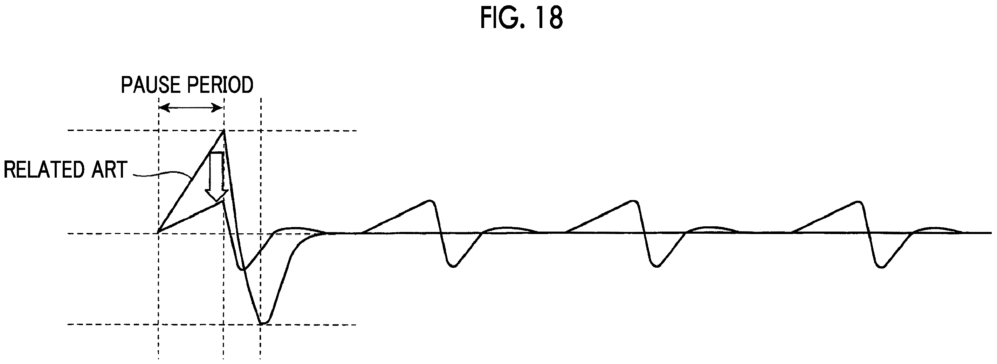

As a result, in the LED print head 60 according to Exemplary Embodiment 1, as shown in Fig. 18, the fluctuation in the voltage in the power supply circuit 101 can be suppressed to be small as the supply current to be cut off is small. Therefore, at the start of the scanning by the LED print head 60, as shown in Fig. 15, the occurrence of the density unevenness, such as a region with a low density of white streaks or a region with a high density of black streaks, in the halftone image as shown in Fig. 15 is suppressed.

Accordingly, in the LED print head 60, the supply current for energizing each of the SLED chips 67-1 to 67-40 can be relatively increased, and a wide range of the intensity of light can be obtained.

[Exemplary Embodiment 2]

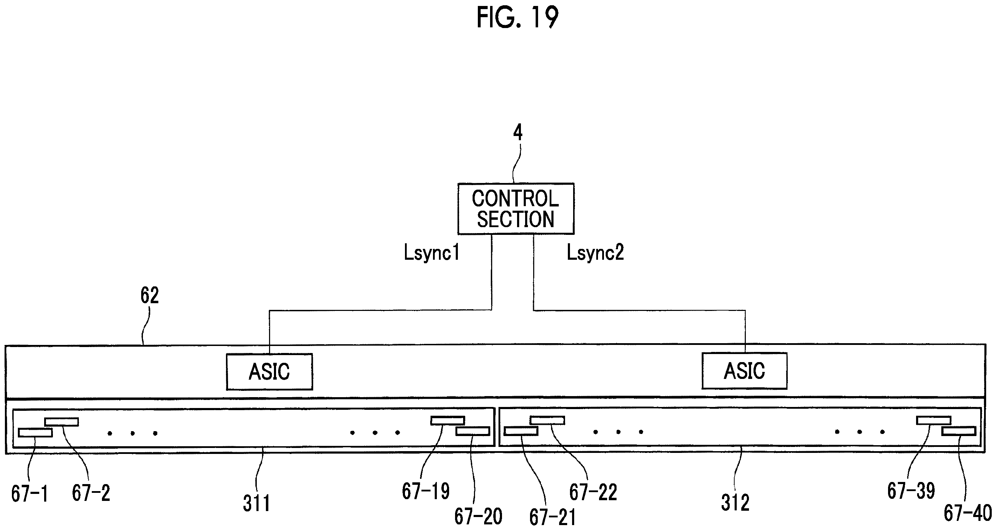

Fig. 19 is a configuration diagram showing an optical scanning device according to Exemplary Embodiment 2 of the present invention.

In Exemplary Embodiment 2, the drive unit is configured to vary the timing of the non-scanning period so that the fluctuation in the drive voltage that occurs during the non-scanning period is suppressed.

Here, the fluctuation in the drive voltage that occurs during the non-scanning period converges such that the drive voltage is increased to a value exceeding a specified value and then is decreased to a value lower than the specified value.

That is, as shown in Fig. 19, the LED print head 60 as an example of the optical scanning device according to Exemplary Embodiment 2 is different from the LED print head 60 according to Exemplary Embodiment 1 in that the plurality of SLED chips 67-1 to 67-40 are divided into two sets instead of the plurality of SLED chips 67-1 to 67-40 being divided into four sets. A first set of SLED chip groups 311 consists of the SLED chips 67-1 to 67-20. A second set of SLED chip groups 312 consists of the SLED chips 67-21 to 67-40.

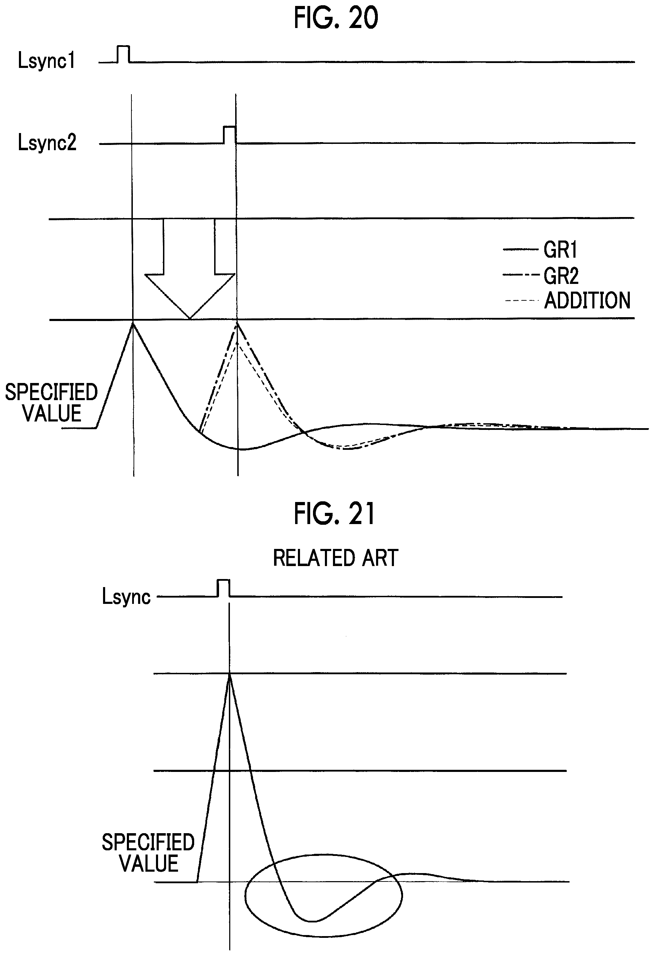

In addition, in the LED print head 60 according to Exemplary Embodiment 2, as shown in Fig. 20, the first and second line sync signals Lsync1 and Lsync2 output from the control section 4 have varied timings of the pause periods so that the fluctuation in the drive voltage that occurs during the pause period is suppressed, instead of evenly setting the pause periods of the first set of SLED chip groups 311 and the second set of SLED chip groups 312.

More specifically, in the LED print head 60 of the related art, the fluctuation in the drive voltage that occurs during the pause period is rapidly increased to a value exceeding the specified value, then is decreased to a value lower than the specified value, and converges to the specified value, as shown in Fig. 21. A fluctuation range of the drive voltage is changed by a lighting rate defined by the number of lighting-up light emitting thyristors of the SLED chips 67-1 to 67-40 immediately before the pause period, an amount of current flowing through the light emitting thyristor, or the like.

In a case in which the lighting rate of the light emitting thyristors of the SLED chips 67-1 to 67-40 immediately before the pause period is high and/or the amount of current applied to the light emitting thyristors is large, the fluctuation range of the drive voltage tends to be large.

In the LED print head 60 according to Exemplary Embodiment 2, as shown in Fig. 20, the pause periods of the SLED chips 67-21 to 67-40 of the second set of SLED chip groups 312 are set so that the fluctuation in the drive voltage of the SLED chips 67-1 to 67-20 of the first set of SLED chip groups 311 is suppressed by the fluctuation in the drive voltage of the SLED chips 67-21 to 67-40 of the second set of SLED chip groups 312.

In the LED print head 60, as shown in Fig. 20, after the lapse of the pause period, the drive voltage that has reached the maximum value with the start of the scanning period is rapidly decreased, is decreased to be lower than the specified value, and then gradually returns to the specified value.

Therefore, the control section 4 outputs the second line sync signal Lsync2 to the second set of SLED chip groups 312 such that the pause periods of the SLED chips 67-21 to 67-40 in the second set of SLED chip groups 312 are synchronized with the time in which the drive voltage of the SLED chips 67-1 to 67-20 in the first set of SLED chip groups 311 is rapidly decreased to the specified value.

As described above, in the LED print head 60 according to Exemplary Embodiment 2, the drive current itself is reduced by dividing the SLED chips 67-1 to 67-40 into two sets. In addition, by synchronizing the output timing of the second line sync signal Lsync2 for the second set of SLED chip groups 312 with the timing at which the drive voltage by the SLED chips 67-1 to 67-20 in the first set of SLED chip groups 311 is lower than the specified value, it is possible to offset the decrease in the drive voltage by the first set of SLED chip groups 311 to the specified value or lower and the rapid increase in the drive voltage by the second set of SLED chip groups 312, and to suppress the rapid increase in the drive voltage by the second set of SLED chip groups 312 to be smaller than in the first set of SLED chip groups 311.

Since other configurations and effects are the same as the configurations and effects in Exemplary Embodiment 1, the description thereof will be omitted.

In the above-described exemplary embodiments, a case has been described in which the present invention is applied to a full-color image forming apparatus, but it goes without saying that the present invention can be similarly applied to a monochrome image forming apparatus.

In addition, in the above-described exemplary embodiments, a case has been described in which the optical scanning device is applied to the image forming apparatus, but a target apparatus to which the optical scanning device is applied is not limited to the image forming apparatus.

Further, in the above-described exemplary embodiments, a case has been described in which the light emitting thyristor of the SLED chip is driven with the anode of H (0 V) and the cathode of L (-3.3 V) as the optical scanning device, but it goes without saying that the light emitting thyristor of the SLED chip may be driven with the anode of H (positive electrode of about +3.3 V) and the cathode of L (0 V).

(Supplementary Note)

(((1))) An optical scanning device comprising:

a scanning unit that performs scanning by disposing a plurality of light emitting element groups, each of which includes a plurality of light emitting elements arranged along a main scanning direction, along the main scanning direction so as to face a scanning target object and causing each of the light emitting element groups to emit light based on image information; and
a drive unit that drives each of the light emitting element groups of the scanning unit for each scanning period,
wherein the drive unit divides the plurality of light emitting element groups into a plurality of sets, and varies a timing of a non-scanning period set between the scanning periods in at least two sets of the light emitting element groups divided into the plurality of sets.

(((2))) The optical scanning device according to (((1))),
wherein, in the plurality of sets, a plurality of adjacent light emitting element groups among the plurality of light emitting element groups are included in an identical set.

(((3))) The optical scanning device according to (((2))),
wherein the drive unit is disposed for each set of the plurality of light emitting element groups.

(((4))) The optical scanning device according to (((3))),
wherein the drive unit equally divides an interval from the scanning period to a next scanning period in accordance with the number of sets of the light emitting element groups, and varies the timing of the non-scanning period by the equally divided interval.

(((5))) The optical scanning device according to (((1))),
wherein the drive unit varies the timing of the non-scanning period so that a fluctuation in a drive voltage that occurs during the non-scanning period is suppressed.

(((6))) The optical scanning device according to (((5))),
wherein the fluctuation in the drive voltage that occurs during the non-scanning period converges such that the drive voltage is increased to a value exceeding a specified value and then is decreased to a value lower than the specified value.

(((7))) The optical scanning device according to (((6))),
wherein the drive unit drives each set of the light emitting element groups after the fluctuation in the drive voltage converges.

(((8))) The optical scanning device according to (((6))),
wherein the drive unit causes a next set of the light emitting element groups to each emit light immediately before the drive voltage becomes lower than the specified value.

(((9))) An image forming apparatus comprising:

an image carrier; and
an exposure unit that exposes the image carrier based on image information,
wherein the optical scanning device according to any one of (((1))) to (((8))) is used as the exposure unit.

With the optical scanning device according to (((1))), a fluctuation in an intensity of light caused by the fluctuation in the drive voltage can be suppressed as compared with a case in which the timings of the non-scanning periods in the plurality of light emitting element groups are identical to each other.

With the optical scanning device according to (((2))), the drive unit is easily configured as compared with a case in which the plurality of light emitting element groups spaced from each other are included in an identical set.

With the optical scanning device according to (((3))), the non-scanning period is easily set as compared with a case in which all the sets of all the plurality of light emitting element groups are driven by an identical drive unit.

With the optical scanning device according to (((4))), the drive unit can reduce an influence on an image quality caused by varying the scanning period of each set of the light emitting element group as compared with a case in which the interval from the scanning period to the next scanning period is divided unevenly in accordance with the number of sets of the light emitting element groups.

With the optical scanning device according to (((5))), the drive unit can further reduce an influence of the fluctuation in the drive voltage as compared with a case in which the fluctuation in the drive voltage is not taken into consideration in the variation in the timing of the non-scanning period.

With the optical scanning device according to (((6))), the influence of the fluctuation in the drive voltage can be easily reduced as compared with a case in which the fluctuation in the drive voltage that occurs during the non-scanning period is not clear.

With the optical scanning device according to (((7))), the drive unit can further reduce the influence of the fluctuation in the drive voltage as compared with a case in which each set of the light emitting element groups is driven before the fluctuation in the drive voltage converges.

With the optical scanning device according to (((8))), the drive unit can offset an influence of the drive voltage being lower than the specified value as compared with a case in which the next set of the light emitting element groups is caused to emit light in a case in which the drive voltage exceeds the specified value.

With the image forming apparatus according to (((9))), the fluctuation in the intensity of light caused by the fluctuation in the drive voltage can be suppressed, and the image quality can be improved, as compared with a case in which the optical scanning device according to any one of (((1))) to (((8))) is not used as the exposure unit.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

1: image forming apparatus
13: exposure device
60: LED print head
100: signal generation circuit

**Claims**

1. An optical scanning device comprising:

   a scanning unit that performs scanning by disposing a plurality of light emitting element groups, each of which includes a plurality of light emitting elements arranged along a main scanning direction, along the main scanning direction so as to face a scanning target object and causing each of the light emitting element groups to emit light based on image information; and
   a drive unit that drives each of the light emitting element groups of the scanning unit for each scanning period,

   wherein the drive unit divides the plurality of light emitting element groups into a plurality of sets, and varies a timing of a non-scanning period set between the scanning periods in at least two sets of the light emitting element groups divided into the plurality of sets.

2. The optical scanning device according to claim 1, wherein, in the plurality of sets, a plurality of adjacent light emitting element groups among the plurality of light emitting element groups are included in an identical set.

3. The optical scanning device according to claim 2, wherein the drive unit is disposed for each set of the plurality of light emitting element groups.

4. The optical scanning device according to claim 3, wherein the drive unit equally divides an interval from the scanning period to a next scanning period in accordance with the number of sets of the light emitting element groups, and varies the timing of the non-scanning period by the equally divided interval.

5. The optical scanning device according to claim 1, wherein the drive unit varies the timing of the non-scanning period so that a fluctuation in a drive voltage that occurs during the non-scanning period is suppressed.

6. The optical scanning device according to claim 5, wherein the fluctuation in the drive voltage that occurs during the non-scanning period converges such that the drive voltage is increased to a value exceeding a specified value and then is decreased to a value lower than the specified value.

7. The optical scanning device according to claim 6, wherein the drive unit drives each set of the light emitting element groups after the fluctuation in the drive voltage converges.

8. The optical scanning device according to claim 6, wherein the drive unit causes a next set of the light emitting element groups to each emit light immediately before the drive voltage becomes lower than the specified value.

9. An image forming apparatus comprising:

   an image carrier; and
   an exposure unit that exposes the image carrier based on image information,
   wherein the optical scanning device according to any one of claims 1 to 8 is used as the exposure unit.

# FIG. 1

CONTROL SECTION

IMAGE PROCESSING SECTION

IMAGE READING APPARATUS

PC

EP 4 718 831 A1

# FIG. 2

EP 4 718 831 A1

## FIG. 3

EP 4 718 831 A1

# FIG. 4

## FIG. 5A

60

67-1  67-2  67-3  67-4  67-36  67-37  67-38  67-39  67-40

C

11

## FIG. 5B

C

FIG. 6

# FIG. 7

# FIG. 8

EP 4 718 831 A1

# FIG. 9

EP 4 718 831 A1

FIG. 10

FIG. 11A

FIG. 11B

EP 4 718 831 A1

## FIG. 12A

LIGHT OUTPUT [W]

1

3

TIME [t]

## FIG. 12B

LIGHT OUTPUT [W]

3

1

TIME [t]

## FIG. 13

RELATED ART

SPEED-UP

RELATED ART

FIG. 14A

n-TH LINE

n+1-TH LINE

n+2-TH LINE

n+i-TH LINE

PERIOD A: PERIOD IN WHICH STREAK-LIKE UNEVENNESS OCCURS
DUE TO VOLTAGE FLUCTUATION IN RISE IN READING
PERIOD IMMEDIATELY AFTER NON-READING PERIOD

RELATED ART

SS CYCLE
FIRST LINE CYCLE

SS CYCLE
FIRST LINE CYCLE

FIG. 14B

LIGHTING
PERIOD

PAUSE PERIOD

LIGHTING
PERIOD

PAUSE PERIOD

EP 4 718 831 A1

FIG. 15

DENSITY FLUCTUATION IMAGE OF HALFTONE IMAGE

## FIG. 16

CONTROL SECTION — 4

Lsync1  Lsync2  Lsync3  Lsync4

62

ASIC — $100_1$   ASIC — $100_2$   ASIC — $100_3$   ASIC — $100_4$

67-1  67-2  67-9  67-10  67-11  67-12  67-19  67-20  67-21  67-22  67-29  67-30  67-31  67-32  67-39  67-40

EP 4 718 831 A1

# FIG. 17

EP 4 718 831 A1

FIG. 18

# FIG. 19

EP 4 718 831 A1

## FIG. 20

Lsync1

Lsync2

—— GR1
—·— GR2
----- ADDITION

SPECIFIED
VALUE

## FIG. 21

RELATED ART

Lsync

SPECIFIED
VALUE

**EUROPEAN SEARCH REPORT**

Application Number

EP 25 15 8349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 223166 A (FUJI XEROX CO LTD) 6 September 2007 (2007-09-06) | 1,5,9 | INV. H04N1/04 |
| Y | * paragraph [0002] - paragraph [0044]; figures 1, 7, 8, 11 * | 2-4,6-8 | H04N1/40 G03G15/043 |
| | ----- | | |
| Y | US 2010/328416 A1 (IKEDA CHIKAHO [JP] ET AL) 30 December 2010 (2010-12-30) | 2-4 | |
| A | * paragraph [0044] - paragraph [0047]; figure 4 * | 1,5-9 | |
| | ----- | | |
| Y | US 2015/103128 A1 (TSUCHIYA KEN [JP]) 16 April 2015 (2015-04-16) | 6-8 | |
| A | * paragraph [0072] - paragraph [0075]; figure 9 * | 1-5,9 | |
| | ----- | | |

TECHNICAL FIELDS
SEARCHED (IPC)

H04N
G03G

The present search report has been drawn up for all claims

| Place of search | Date of completion of the search | Examiner |
|---|---|---|
| The Hague | 19 June 2025 | Lauritzen, Jan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 8349

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | | Publication date | Patent family member(s) | | Publication date |
|---|---|---|---|---|---|
| JP 2007223166 | A | 06-09-2007 | NONE | | |
| US 2010328416 | A1 | 30-12-2010 | CN | 101927617 A | 29-12-2010 |
| | | | KR | 20110000498 A | 03-01-2011 |
| | | | US | 2010328416 A1 | 30-12-2010 |
| US 2015103128 | A1 | 16-04-2015 | JP | 6206068 B2 | 04-10-2017 |
| | | | JP | 2015074195 A | 20-04-2015 |
| | | | US | 2015103128 A1 | 16-04-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007160930 A
- JP 2008093896 A